# EUROPÄISCHE PATENTSCHRIFT

(11) **EP 2 820 719 B1**
(45) Veröffentlichungstag und Bekanntmachung des Hinweises auf die Patenterteilung: **18.04.2018**
(21) Anmeldenummer: 13712495.4
(22) Anmeldetag: 01.03.2013
(51) Int. Cl.: H01R 13/502, H01R 13/639, H01R 13/73

(54) **STECKVERBINDER**
PLUG CONNECTOR
CONNECTEUR À ENFICHAGE

(30) Priorität: 01.03.2012 DE 102012101690
(43) Veröffentlichungstag der Anmeldung: 07.01.2015
(73) Patentinhaber: Phoenix Contact GmbH & Co. KG, 32825 Blomberg (DE)
(72) Erfinder: SEELIG, Marco, 33818 Leopoldshöhe (DE); FELDNER, Ralf, 32760 Detmold (DE)
(74) Vertreter: Michalski Hüttermann & Partner Patentanwälte mbB
(86) Internationale Anmeldenummer: PCT/EP2013/054188
(87) Internationale Veröffentlichungsnummer: WO 2013/128005

(56) Entgegenhaltungen:
- DE-A1-102009 021 720
- DE-U1-202010 014 351

## Beschreibung

Die Erfindung betrifft einen Steckverbinder zum elektrischen Anschließen eines Elektrofahrzeugs an eine Ladeeinrichtung, mit einem Stecker oder einer Buchse und einer elektrisch angetriebenen Verriegelungseinrichtung, wobei der Stecker bzw. die Buchse zum Herstellen einer elektrischen Verbindung mit einer zweiten Buchse bzw. einem zweiten Stecker eines zweiten dem Elektrofahrzeug oder der Ladeeinrichtung zugeordneten Steckverbinders ausgestaltet ist.

Im Bereich von E-Mobility-Applikationen sind Steckverbinder mit elektrischer Verriegelung bekannt und normativ vorgesehen, um elektrische Energie von der Ladeeinrichtung zum Aufladen eines in dem Elektrofahrzeug vorgesehenen Fahrzeugakkumulators zu übertragen. Dazu können an der Ladeeinrichtung und/oder an dem Elektrofahrzeug jeweils ein Gerätestecker vorgesehen sein, so dass mittels eines Verbindungskabels, das an beiden Enden einen zu dem Gerätestecker korrespondierenden Kabelstecker aufweist, eine elektrische Verbindung zwischen der Ladeeinrichtung und dem Elektrofahrzeug herstellbar ist. Der Gerätestecker sowie der Kabelstecker können als Stecker oder Buchse ausgeführt sein, wobei der Kabelstecker oftmals als Stecker, also mit männlichen Kontakten, und der Gerätestecker oftmals als Buchse, also mit weiblichen Kontakten, ausgestaltet ist.

Die Realisierung dieser elektrischen Verriegelung kann ein mechanisches Einfahren eines Zylinderstiftes senkrecht zur Steckrichtung der vollständig auf Anschlag gesteckten Steckverbinder vorsehen, wobei durch den Zylinderstift der Gerätestecker und der Kabelstecker in radialer Richtung über entsprechende Bohrungen oder Konturen durchdrungen werden können, so dass beim Verriegeln ein Formschluss in axialer Richtung erzeugt wird. Dadurch wird ein manuelles Lösen der verbundenen Steckverbinder verhindert, damit aufgrund von Sicherheitsaspekten unter elektrischer Last stehende Steckverbinder nicht voneinander getrennt werden können oder eine nicht vollständig durchgeführte Aufladung des Fahrzeugakkumulators nicht unterbrochen wird. In der Regel erfolgt der Antrieb des Zylinderstiftes elektromechanisch, beispielsweise über Hubmagnete oder Aktuatoren mit vorgeschalteter Mechanik.

DE 20 2010 014351 U1 beschreibt eine Anbausteckdose, wenigstens aufweisend einen verschieblichen Riegel zum Verriegeln eines in eine Steckeraufnahme der Anbausteckdose eingesteckten Steckers und einen Stellmotor, der, bezogen auf die Anbausteckdose, in einer ersten Montageposition montierbar ist, wobei der Stellmotor in dieser direkt mit dem Riegel koppelbar ist.

Sofern nun ein Gerätestecker in die Öffnung einer Wandung, beispielsweise eines Elektrofahrzeugs oder einer Ladeeinrichtung, eingesetzt wird, hat dies vielfach von der Rückseite der Wandung her zu erfolgen, da der Antrieb des Zylinderstiftes, insbesondere wenn der Zylinderstift senkrecht zur Steckrichtung der Steckverbinder einführbar ist, seitlich von dem Steckverbinder "absteht", so dass ein Durchführen des Steckverbinders einschließlich des Antriebs des Zylinderstiftes von der Vorderseite der Wandung durch die Öffnung hindurch verunmöglicht ist. Das bedeutet, dass ein nachträgliches Montieren eines derartigen Gerätesteckers, insbesondere wenn kein rückseitiges Anbringen des Gerätesteckers an die Wandung aufgrund beengter Platzverhältnisse möglich ist, in fast allen Fällen ausgeschlossen ist. Daher ist es die Aufgabe der Erfindung, einen Steckverbinder zum elektrischen Anschließen eines Elektrofahrzeugs mit einem elektromechanisch betriebenen Zylinderstift zum Verriegeln eines Stecker-Buchsen-Paares anzugeben, der auch nachträglich in eine Wandung und bei beengten Platzverhältnissen montierbar ist.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Demnach wird die Aufgabe der Erfindung gelöst durch einen Steckverbinder zum elektrischen Anschließen eines Elektrofahrzeugs an eine Ladeeinrichtung, mit einem Stecker oder einer Buchse und einer elektromechanisch angetriebenen Verriegelungseinrichtung, wobei der Stecker bzw. die Buchse zum Herstellen einer elektrischen Verbindung mit einer zweiten Buchse bzw. einem zweiten Stecker eines zweiten dem Elektrofahrzeug oder der Ladeeinrichtung zugeordneten Steckverbinders ausgestaltet ist, die Verriegelungseinrichtung axial zur Steckrichtung des Steckers bzw. der Buchse zum mechanischen Verriegeln und/oder Entriegeln eines miteinander verbundenen Stecker-Buchsen-Paares bewegbar ausgestaltet ist, und die Verriegelungseinrichtung und/oder der Stecker bzw. die Buchse eine derart ausgestaltete Zentriereinrichtung aufweist, dass die Verriegelungseinrichtung formschlüssig an dem Stecker bzw. an der Buchse in einer durch die Zentriereinrichtung vorbestimmten Position lösbar befestigbar ist.

Es ist also ein wesentlicher Punkt der Erfindung, dass der Steckverbinder zweiteilig aufgebaut ist, nämlich einerseits den Stecker bzw. die Buchse und andererseits die Verriegelungsrichtung aufweist, wobei die Verriegelungsrichtung an dem Stecker bzw. an der Buchse lösbar befestigbar ist. Das bedeutet also, dass der Steckverbinder auch nachträglich unter schwierigen Licht- und/oder Platzverhältnissen in eine Öffnung einer Wandung eines Elektrofahrzeugs und/oder einer Ladeeinrichtung einsetzbar ist, so beispielsweise in einem ersten Schritt der Stecker bzw. die Buchse von der "Außenseite" der Wandung in die Öffnung einsetzbar ist und dann in einem zweiten Schritt die Verriegelungseinrichtung von der "Innenseite" der Wandung an den bereits in die Wandung eingesetzten Stecker bzw. an der Buchse befestigbar ist.

Denn dadurch, dass aufgrund des Vorsehens der Zentriereinrichtung die Verriegelungsrichtung an dem Stecker bzw. an der Buchse formschlüssig in einer vorbestimmten Position befestigbar ist, ist das Zusammenfügen wesentlich vereinfacht. Konkret bedeutet das, dass die Verriegelungsrichtung, welche axial zur Steckrichtung des Steckers bzw. der Buchse zum mechanischen Verriegeln eines Stecker-Buchsen-Paares bewegbar ausgestaltet ist, aufgrund der Zentriereinrichtung an einer vorbestimmten Position an dem Stecker bzw. an der Buchse zu liegen kommt, also beispielsweise in der Ausgestaltung eines Zylinderstiftes zum mechanischen Verriegeln in eine Kontur des Steckers bzw. der Buchse axial zur Steckrichtung des Stecker-Buchsen-Paares einfahren kann. Mit anderen Worten ausgedrückt bedeutet dies, dass aufgrund der Ausgestaltung mit der Zentriereinrichtung ein passgenaues Zusammenfügen der Verriegelungsrichtung mit dem Stecker bzw. der Buchse in die vorbestimmte Position ermöglicht wird, somit also ein Bediener die Verriegelungsrichtung quasi blind mit dem Stecker bzw. der Buchse zusammenfügen kann.

Grundsätzlich können der Stecker und/oder die Buchse als beliebige aus dem Stand der Technik bekannte Mittel zum Herstellen einer elektrischen Verbindung zwischen den Steckverbindern ausgestaltet sein, so beispielsweise als Kabelstecker und/oder Gerätestecker. Vorzugsweise weisen sowohl der Stecker als auch die Buchse eine Mehrzahl von elektrischen Kontakten auf, wobei besonders bevorzugt der Stecker mit männlichen Kontakten und die Buchse mit dazu korrespondierenden weiblichen Kontakten ausgestaltet ist. Ebenfalls kann der Steckverbinder in Verbindung mit einem beliebigen aus dem Stand der Technik bekannten Elektrofahrzeug sowie einer beliebigen Ladeeinrichtung verwendet werden.

Das Verriegelungsmittel kann, wie nachfolgend im Detail weiter ausgeführt ist, beispielsweise als Zylinderstift oder als Bolzen ausgeführt sein, wobei der Zylinderstift bzw. Bolzen axial zur Steckrichtung des Steckers bzw. der Buchse zum mechanischen Verriegeln und/oder Entriegeln eines miteinander verbundenen Stecker-Buchsen-Paares bewegbar ausgestaltet ist. Besonders bevorzugt weist der Stecker und die Buchse eine jeweilige zur Verriegelungseinrichtung korrespondierende Kontur oder Öffnung auf, so dass die Verriegelungseinrichtung in ihrer Schließposition bevorzugt beide jeweiligen Konturen bzw. Öffnungen des Steckers und der Buchse durchdringt, so dass dadurch eine mechanische Verriegelung des miteinander verbundenen Stecker-Buchsen-Paares erfolgt. Entsprechend ist die Verriegelungseinrichtung in ihrer Öffnungsposition nicht im Eingriff mit vorgenannter Kontur bzw. Öffnung der zweiten Buchse bzw. des zweiten Steckers, so dass die zweite Buchse bzw. der zweite Stecker aus dem Stecker bzw. der Buchse entfernbar ist.

Zur Ausgestaltung der Zentriereinrichtung gibt es ebenfalls verschiedene Möglichkeiten, so beispielsweise über eine an der Verriegelungseinrichtung vorgesehene Kontur mit entsprechend an dem Stecker bzw. an der Buchse vorgesehener Gegenkontur, wie nachfolgend im Detail weiter erläutert ist. Jedenfalls ist bevorzugt, dass durch die Zentriereinrichtung eine eindeutige, vorbestimmte Position beim Zusammenfügen der Verriegelungseinrichtung mit dem Stecker bzw. der Buchse erreicht wird, wobei die vorbestimmte Position bevorzugt wenigstens einen Formschluss in radialer Richtung zur Steckrichtung des Steckers bzw. der Buchse ausbildet, ganz besonders bevorzugt auch einen axialen Formschluss axial zur Steckrichtung des Steckers bzw. der Buchse ausbildet, dabei ganz besonders bevorzugt in Richtung der zweiten Buchse bzw. des zweiten Steckers, also bevorzugt in "Abziehrichtung" eines Stecker von einer korrespondierenden Buchse.

Nach einer weiteren bevorzugten Ausführungsform der Erfindung ist vorgesehen, dass die Zentriereinrichtung derart ausgestaltet ist, dass durch Befestigen der Verriegelungseinrichtung an dem Stecker bzw. an der Buchse mittels einer ersten Bewegung der Verriegelungseinrichtung in radialer Richtung zur Steckrichtung des Steckers bzw. der Buchse und mittels einer zweiten Bewegung in axialer Richtung zur Steckrichtung des Steckers bzw. der Buchse die vorbestimmte Position erreichbar ist. Mit anderen Worten ausgedrückt ist die Zentriereinrichtung vorzugsweise derart ausgestaltet, dass beim Heranführen der Verriegelungseinrichtung "von hinten" an den Stecker bzw. an die Buchse und nachfolgendem "Absenken" der Verriegelungseinrichtung, also durch die erste Bewegung in radialer Richtung, und darauf folgendem "nach vorn Schieben", also durch die zweite Bewegung in axialer Richtung, die vorbestimmte Position erreichbar ist, in der die Verriegelungseinrichtung mit dem Stecker bzw. der Buchse formschlüssig verbunden ist bzw. die Verriegelungseinrichtung formschlüssig an dem Stecker bzw. an der Buchse befestigt ist. Durch eine derartige Ausgestaltung kann also die Verriegelungseinrichtung in besonders einfacher Weise auch bei ungünstigen Licht- und/oder schwierigem sowie beengten Platzverhältnissen an dem Stecker bzw. an der Buchse befestigt werden, so dass zum Verriegeln eines miteinander verbundenen Stecker-Buchsen-Paares die Verriegelungseinrichtung in der vorbestimmten bzw. definierten Position axial zur Steckrichtung des Steckers bzw. der Buchse bewegt werden kann.

Grundsätzlich kann die Verriegelungseinrichtung beliebig ausgestaltet sein, wobei ganz besonders bevorzugt die Verriegelungseinrichtung als Bolzen oder als Zylinderstift ausgestaltet ist. Nach einer weiter bevorzugten Ausführungsform der Erfindung ist vorgesehen, dass der Stecker bzw. die Buchse eine Öffnung zum Einführen des Bolzens aufweist, die Öffnung und der Bolzen einen im Wesentlichen gleich großen Durchmesser aufweisen und der Bolzen in der vorbestimmten Position derart relativ zu dem Stecker bzw. zu der Buchse angeordnet ist, dass der Bolzen zum mechanischen Verriegeln eines miteinander verbundenen Stecker-Buchsen-Paares axial zur Steckrichtung des Steckers bzw. der Buchse in die Öffnung einführbar ist.

Nach einer weiteren bevorzugten Ausführungsform der Erfindung ist vorgesehen, dass der Steckverbinder eine Antriebseinrichtung für die Verriegelungseinrichtung aufweist, wobei die Antriebseinrichtung die Verriegelungseinrichtung umfasst, die Zentriereinrichtung zweiteilig an der Antriebseinrichtung und an dem Stecker bzw. an der Buchse ausgestaltet ist und der an der Antriebseinrichtung vorgesehene erste Teil der Zentriereinrichtung eine sich halbkreisförmig, in axialer Richtung zur Steckrichtung des Steckers bzw. der Buchse erstreckende Auskragung aufweist und der an dem Stecker bzw. an der Buchse vorgesehene zweite Teil der Zentriereinrichtung eine sich halbkreisförmig erstreckende Nut zur formschlüssigen Aufnahme der Auskragung aufweist. Alternativ kann der erste Teil der Zentriereinrichtung eine Kontur aufweisen und der zweite Teil der Zentriereinrichtung eine Gegenkontur zur formschlüssigen Aufnahme der Kontur aufweisen. In jedem Fall ist gemäß dieser Ausführungsform vorgesehen, dass die Zentriereinrichtung mit einem ersten Teil an der Antriebseinrichtung angeordnet ist und mit einem zweiten Teil an dem Stecker bzw. an der Buchse angeordnet ist, so dass der erste Teil und der zweite Teil der Zentriereinrichtung derart zusammenwirken, dass durch das Zusammenfügen der Antriebseinrichtung bzw. der Verriegelungseinrichtung mit dem Stecker bzw. der Buchse die Verriegelungseinrichtung und der Stecker bzw. die Buchse die vorbestimmte Position eingehen.

Nach einer noch weiteren bevorzugten Ausführungsform der Erfindung ist vorgesehen, dass die Antriebseinrichtung ein Befestigungsmittel zum Fixieren der an dem Stecker bzw. an der Buchse befestigten Antriebseinrichtung aufweist. Dabei ist ferner bevorzugt, dass das Befestigungsmittel als Schraube ausgeführt ist, beispielsweise als eine selbstschneidende Schraube, die an der Antriebseinrichtung vormontiert sein kann, so dass nach dem Zusammenfügen der Antriebseinrichtung mit dem Stecker bzw. der Buchse und nach Erreichen der vordefinierten Position durch das Befestigungsmittel eine Fixierung, vorzugsweise eine permanente Fixierung, der Antriebseinrichtung mit dem Stecker bzw. mit der Buchse erreicht wird. Dadurch kann ein "Kippen" der Antriebseinrichtung relativ zum Stecker bzw. zur Buchse verhindert werden, so dass ein noch verlässlicherer Betrieb der Antriebseinrichtung bzw. der Verriegelungseinrichtung gewährleistet werden kann.

Grundsätzlich kann die elektromechanische Betätigung der Verriegelungseinrichtung durch beliebige aus dem Stand der Technik bekannte Mittel bewirkt werden, wobei jedoch besonders bevorzugt ist, dass die Antriebseinrichtung einen durch einen elektrischen Impuls ansteuerbaren Aktuator zum Verriegeln bzw. Entriegeln eines miteinander verbundenen Stecker-Buchsen-Paares aufweist. Zur Bereitstellung des elektrischen Impulses können eine Energiequelle oder andere Mittel vorgesehen sein, so beispielsweise ein Akkumulator, ein Kondensator und/oder eine Spule. Zudem kann vorgesehen sein, dass die Energiequelle durch die Ladeeinrichtung und/oder einen dem Elektrofahrzeug zugeordneten Fahrzeugakkumulator aufladbar ist.

Nach einer weiteren bevorzugten Ausführungsform ist vorgesehen, dass der Steckverbinder derart zum Befestigen in einer Öffnung einer Wandung ausgestaltet ist, dass der Stecker bzw. die Buchse nur bei nicht an dem Stecker bzw. an der Buchse befestigten Verriegelungseinrichtung in die Öffnung von der einen Seite der Wandung her einsetzbar ist und die Verriegelungseinrichtung von der anderen Seite der Wandung an dem in die Öffnung eingesetzten Stecker bzw. Buchse befestigbar ist. Demnach ist also bevorzugt, dass der Steckverbinder nicht "als Ganzes" an der Wandung befestigbar ist, sondern derart ausgestaltet ist, dass immer zuerst der Stecker bzw. die Buchse in die Öffnung einer Wandung einzusetzen ist und dann in einem zweiten Schritt, vorzugsweise von der anderen Seite der Wandung her, die Verriegelungseinrichtung mit dem bereits in die Wandung eingesetzten Stecker bzw. der Buchse verbunden wird. Denn durch den mittels der Zentriereinrichtung erreichten Formschluss zwischen dem Stecker bzw. der Buchse und der Verriegelungseinrichtung wird ein "Kippen" vermieden, so dass eine verlässliche und sichere Betätigung der Verriegelungseinrichtung zum Verriegeln eines miteinander verbundenen Stecker-Buchsen-Paares möglich ist. "Miteinander verbunden" meint im Rahmen dieser Erfindung, dass die beiden Steckverbinder eine elektrische Verbindung zwischen dem Elektrofahrzeug und der Ladeeinrichtung bereitstellen und dazu vorzugsweise eine form- und/oder kraftschlüssige Verbindung zwischen ihren Steckern bzw. Buchsen aufweisen.

Die Aufgabe der Erfindung wird weiterhin gelöst durch eine Steckverbinderanordnung mit einem Steckverbinder wie bereits ausgeführt und einem zweiten Steckverbinder, wobei der zweite Steckverbinder bevorzugt eine zweite Buchse bzw. einen zweiten Stecker aufweist, der korrespondierend zum Eingehen einer elektrischen Verbindung mit dem Stecker bzw. der Buchse ausgestaltet ist. Zudem wird die Aufgabe der Erfindung gelöst durch eine Ladeeinrichtung oder ein Elektrofahrzeug, mit einem Steckverbinder wie vorab ausgeführt.

Nachfolgend wird die Erfindung unter Bezugnahme auf die anliegende Zeichnung anhand einer bevorzugten Ausführungsform näher erläutert.

Es zeigen
- Fig. 1: einen Steckverbinder mit einer Buchse und einer Antriebseinrichtung gemäß einer bevorzugten Ausführungsform der Erfindung,
- Fig. 2: die Buchse gemäß der bevorzugten Ausführungsform der Erfindung,
- Fig. 3: die Antriebseinrichtung gemäß der bevorzugten Ausführungsform der Erfindung, und
- Fig. 4: die Buchse gemäß der bevorzugten Ausführungsform der Erfindung in einer zweiten Ansicht.

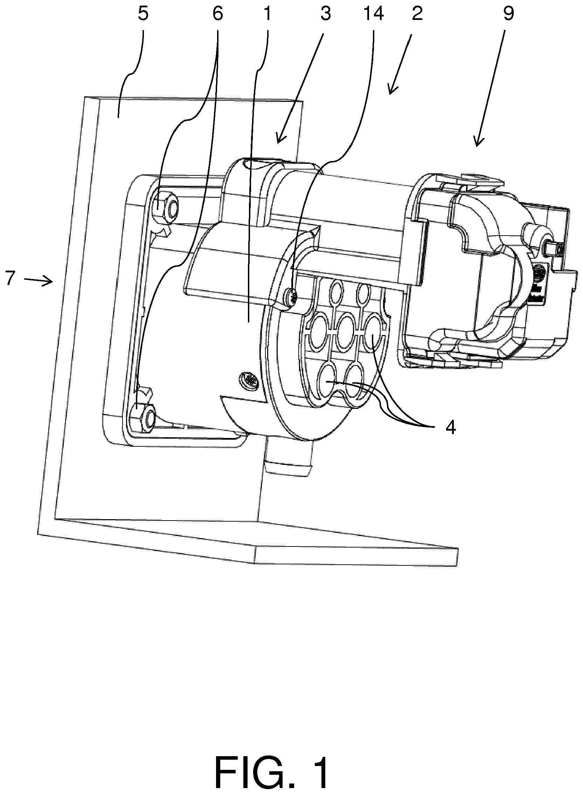

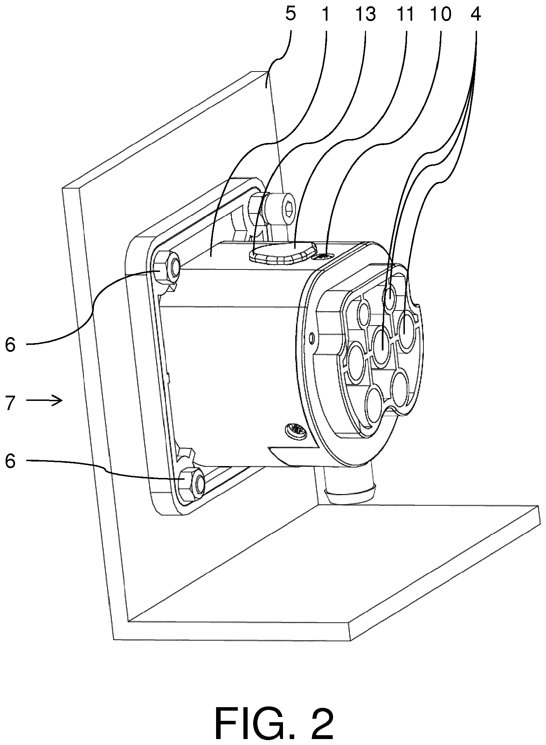

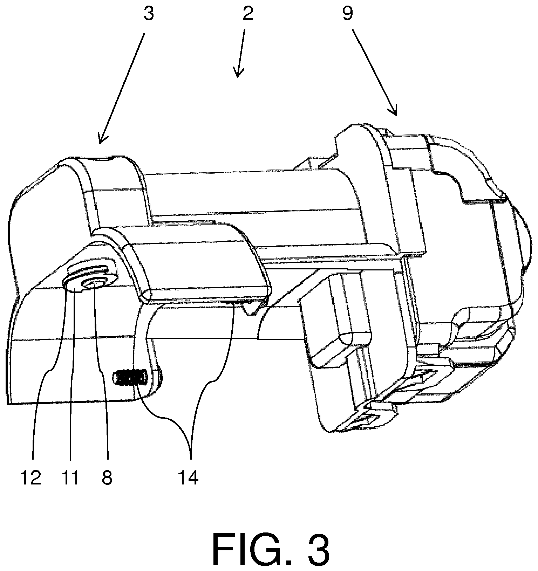

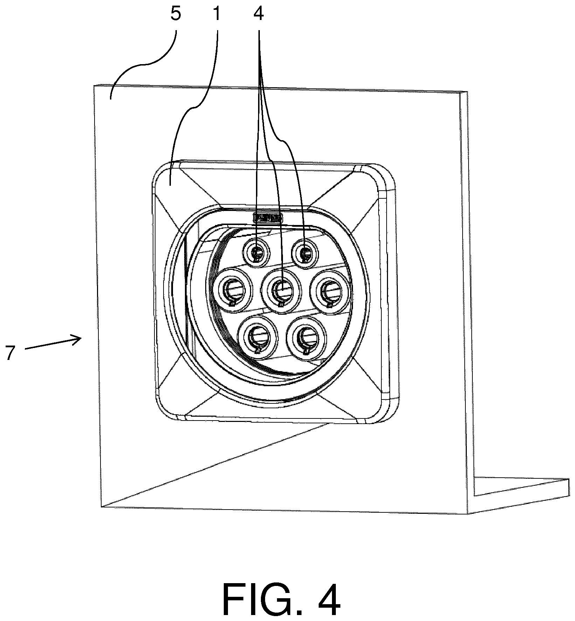

Die Fig. 1 zeigt einen Steckverbinder zum elektrischen Anschließen eines Elektrofahrzeugs an eine Ladeeinrichtung. Der Steckverbinder weist eine Buchse 1 sowie eine Antriebseinrichtung 2 auf, wobei die Antriebseinrichtung 2 eine elektromechanisch angetriebene Verriegelungseinrichtung 3 umfasst. Fig. 2 zeigt die Buchse in Alleinstellung, während Fig. 3 die Antriebseinrichtung 2 zeigt. Schließlich zeigt Fig. 4 die Buchse 1 in einer weiteren Ansicht.

Die Buchse 1 weist eine Mehrzahl von elektrischen Kontakten 4 auf, die zum Herstellen einer elektrischen Verbindung mit einem korrespondierenden Stecker eines zweiten dem Elektrofahrzeug oder der Ladeeinrichtung zugeordneten Steckverbinder ausgestaltet ist. Die Buchse 1 ist in eine Wandung 5, beispielsweise des Elektrofahrzeugs oder der Ladeeinrichtung, eingesetzt und an der Wandung 5 mit Schrauben 6 befestigt.

Die Verriegelungseinrichtung 3 weist einen axial zur Steckrichtung 7 der Buchse beweglich angeordneten Bolzen 8 auf, welcher vorliegend als Zylinderstift ausgestaltet ist. Wie in Fig. 3 gezeigt, verharrt der Bolzen 8 in dieser Darstellung in seiner Öffnungsposition, die nachfolgend weiter erläutert ist. Zur Betätigung des Bolzens 8 weist die Antriebseinrichtung 2 einen Aktuator 9 auf, der durch einen elektrischen Impuls angesteuert ein Verriegeln bzw. Entriegeln eines miteinander verbundenen Stecker-Buchsen 1-Paares ermöglicht.

Dazu, also zum Verriegeln, ist der Bolzen 8 wie bereits ausgeführt axial zur Steckrichtung 7 der Buchse 1 beweglich angeordnet und fährt durch eine Öffnung 10 zur Mittenlinie des Steckverbinders in die Buchse 1 herein, so dass ein mit der Buchse 1 verbundener Stecker, der ebenfalls eine zu der Öffnung 10 korrespondierende weitere Öffnung aufweist, durch Einfahren des Bolzens in die beiden Öffnungen 10 mechanisch gegen Lösen des Stecker-Buchsen 1-Paares verriegelt ist.

Gemäß der Erfindung ist nunmehr vorgesehen, dass die Antriebseinrichtung 2, und damit auch die Verriegelungseinrichtung 3, lösbar an der Buchse 1 befestigbar ist. Das hat den großen Vorteil, dass zunächst die Buchse 1 in der Wandung 5 befestigbar ist und danach in einem zweiten Schritt die Antriebseinrichtung 2 an der Buchse 1 in besonders einfacher Weise befestigt werden kann.

Damit der Bolzen 8 der Antriebseinrichtung 2 passgenau zum Verriegeln eines Stecker-Buchsen 1-Paares in die Öffnung 10 Aktuatorbetrieben eingleiten kann, muss die Antriebseinrichtung 2 passgenau an der Buchse 1 befestigt werden. Zu diesem Zweck ist eine Zentriereinrichtung 11 vorgesehen, welche zweiteilig einerseits an der Buchse 1 sowie an der Antriebseinrichtung 2 ausgestaltet ist.

Wie aus Fig. 2 und Fig. 3 ersichtlich, weist die Zentriereinrichtung 11 an der Antriebseinrichtung 2 eine sich halbkreisförmig, in axialer Richtung entgegen der Steckrichtung 7 der Buchse 1 erstreckende Auskragung 12 auf, also eine Kontur, die mit einer an der Buchse 1 vorgesehenen sich halbkreisförmig erstreckenden Nut 13 derart zusammenwirkt, dass im verbundenen Zustand der Buchse 1 mit der Antriebseinrichtung 2 die Buchse 1 und die Antriebseinrichtung 2 eine formschlüssige Verbindung in einer durch die Zentriereinrichtung 11 vorbestimmten Position eingehen.

Konkret bedeutet dies, dass durch die vorliegende und in Fig. 2 und Fig. 3 gezeigte Ausgestaltung der Zentriereinrichtung 11 mittels einer ersten Bewegung der Antriebseinrichtung 2 hin zur Buchse 1, also durch eine Bewegung der Antriebseinrichtung 2 in radialer Richtung zur Steckrichtung 7 der Buchse 1, und mittels einer zweiten Bewegung in axialer Richtung entgegen der Steckrichtung 7 der Buchse 1, die Auskragung 12 in die Aufnahme der Zentriereinrichtung 11, die vorliegend als Nut 13 ausgestaltet ist, hereingleitet, so dass dadurch die vorbestimmte Position erreicht wird. In dieser Position ist dann die Verriegelungseinrichtung 3 an der Buchse 1 derart zentriert, dass der Bolzen 8 in die Öffnung 10 einfahren kann.

Zur weiteren Fixierung der Antriebseinrichtung 2 an der Buchse 1 sind selbstschneidende Schrauben als Befestigungsmittel 14 vorgesehen, die an der Antriebseinrichtung 2 vormontiert im verbundenen Zustand der Antriebseinrichtung 2 mit der Buchse 1 in die Buchse 1 eingeführt werden können.

**Bezugszeichenliste**

| | |
|---|---|
| Buchse | 1 |
| Antriebseinrichtung | 2 |
| Verriegelungseinrichtung | 3 |
| Elektrische Kontakte | 4 |
| Wandung | 5 |
| Schraube | 6 |
| Steckrichtung | 7 |
| Bolzen | 8 |
| Aktuator | 9 |
| Öffnung | 10 |
| Zentriereinrichtung | 11 |
| Auskragung | 12 |
| Nut | 13 |
| Befestigungsmittel | 14 |

## Patentansprüche

1. Steckverbinder zum elektrischen Anschließen eines Elektrofahrzeugs an eine Ladeeinrichtung, mit einem Stecker oder einer Buchse (1) und einer elektromechanisch angetriebenen Verriegelungseinrichtung (3), wobei
der Stecker bzw. die Buchse (1) zum Herstellen einer elektrischen Verbindung mit einer zweiten Buchse bzw. einem zweiten Stecker eines zweiten dem Elektrofahrzeug oder der Ladeeinrichtung zugeordneten Steckverbinders ausgestaltet ist,
die Verriegelungseinrichtung (3) axial zur Steckrichtung (7) des Steckers bzw. der Buchse (1) zum mechanischen Verriegeln und/oder Entriegeln eines miteinander verbundenen Stecker-Buchsen (1)-Paares bewegbar ausgestaltet ist, und
die Verriegelungseinrichtung (3) und/oder der Stecker bzw. die Buchse (1) eine derart ausgestaltete Zentriereinrichtung (11) aufweist, dass die Verriegelungseinrichtung (3) formschlüssig an dem Stecker bzw. an der Buchse (1) in einer durch die Zentriereinrichtung (11) vorbestimmten Position lösbar befestigbar ist.

2. Steckverbinder nach dem vorhergehenden Anspruch, wobei die Zentriereinrichtung (11) derart ausgestaltet ist, dass durch Befestigen der Verriegelungseinrichtung (3) an dem Stecker bzw. an der Buchse (1) mittels einer ersten Bewegung der Verriegelungseinrichtung (3) in radialer Richtung zur Steckrichtung (7) des Steckers bzw. der Buchse (1) und mittels einer zweiten Bewegung in axialer Richtung zur Steckrichtung (7) des Steckers bzw. der Buchse (1) die vorbestimmte Position erreichbar ist.

3. Steckverbinder nach einem der vorhergehenden Ansprüche, wobei die Verriegelungseinrichtung (3) als Bolzen (8) ausgestaltet ist.

4. Steckverbinder nach dem vorhergehenden Anspruch, wobei der Stecker bzw. die Buchse (1) eine Öffnung (10) zum Einführen des Bolzens aufweist, die Öffnung (10) und der Bolzen einen im Wesentlichen gleich großen Durchmesser aufweisen und der Bolzen in der vorbestimmten Position derart relativ zu dem Stecker bzw. zu der Buchse (1) angeordnet ist, dass der Bolzen zum mechanischen Verriegeln eines miteinander verbundenen Stecker-Buchsen (1)-Paares axial zur Steckrichtung (7) des Steckers bzw. der Buchse (1) in die Öffnung (10) einführbar ist.

5. Steckverbinder nach einem der vorhergehenden Ansprüche, mit einer Antriebseinrichtung (2) für die Verriegelungseinrichtung (3), wobei die Antriebseinrichtung (2) die Verriegelungseinrichtung (3) umfasst, die Zentriereinrichtung (11) zweiteilig an der Antriebseinrichtung (2) und an dem Stecker bzw. an der Buchse (1) ausgestaltet ist und der an der Antriebseinrichtung (2) vorgesehene erste Teil der Zentriereinrichtung (11) eine sich halbkreisförmig, in axialer Richtung zur Steckrichtung (7) des Steckers bzw. der Buchse (1) erstreckende Auskragung (12) aufweist und der an dem Stecker bzw. an der Buchse (1) vorgesehene zweite Teil der Zentriereinrichtung (11) eine sich halbkreisförmig erstreckende Nut (13) zur formschlüssigen Aufnahme der Auskragung (12) aufweist.

6. Steckverbinder nach dem vorhergehenden Anspruch, wobei die Antriebseinrichtung ein Befestigungsmittel (14) zum Fixieren der an dem Stecker bzw. an der Buchse (1) befestigten Antriebseinrichtung (2) aufweist.

7. Steckverbinder nach einem der vorhergehenden Ansprüche 5 oder 6, wobei die Antriebseinrichtung (2) einen durch einen elektrischen Impuls ansteuerbaren Aktuator (9) zum Verriegeln bzw. Entriegeln eines miteinander verbundenen Stecker-Buchsen (1)-Paares aufweist.

8. Steckverbinder nach einem der vorhergehenden Ansprüche, wobei der Steckverbinder derart zum Befestigen in einer Öffnung einer Wandung (5) ausgestaltet ist, dass der Stecker bzw. die Buchse (1) nur bei nicht an dem Stecker bzw. an der Buchse (1) befestigten Verriegelungseinrichtung (3) in die Öffnung von der einen Seite der Wandung (5) her einsetzbar ist und die Verriegelungseinrichtung (3) von der anderen Seite der Wandung (5) an dem in die Öffnung eingesetzten Stecker bzw. an der Buchse (1) befestigbar ist.

9. Steckverbinderanordnung mit einem Steckverbinder nach einem der vorhergehenden Ansprüche und einem zweiten Steckverbinder.

10. Ladeeinrichtung oder Elektrofahrzeug, mit einem Steckverbinder nach einem der vorhergehenden Ansprüche.

## Claims

1. A plug connector for electrically connecting an electric vehicle to a charging device, comprising a plug or a socket (1) and an electromechanically driven locking device (3), wherein
the plug or the socket (1) is configured for establishing an electrical connection to a second socket or a second plug of a second plug connector associated with the electric vehicle or the charging device,
the locking device (3) is movable axially to the plug-in direction (7) of the plug or the socket (1) to mechanically lock and/or unlock an interconnected plug/socket pair (1), and
the locking device (3) and/or the plug or the socket (1) has a centring device (11) configured in such a way that the locking device (3) can be detachably fastened in a form-fitting manner to the plug or to the socket (1) in a position predetermined by the centring device (11).

2. The plug connector according to the preceding claim, wherein the centring device (11) is configured in such a way that the predetermined position can be reached by fastening the locking device (3) to the plug or to the socket (1) by means of a first movement of the locking device (3) in a radial direction relative to the plug-in direction (7) of the plug or socket (1) and by means of a second movement in an axial direction relative to the plug-in direction (7) of the plug or the socket (1).

3. The plug connector according to one of the preceding claims, wherein the locking device (3) is configured as a bolt (8) .

4. The plug connector according to the preceding claim, wherein the plug or the socket (1) has an opening (10) for the insertion of the bolt, the opening (10) and the bolt have a diameter of substantially equal size, and the bolt, in the predetermined position, is arranged relative to the plug or to the socket (1) in such a way that the bolt can be inserted into the opening (10) axially to the plug-in direction (7) of the plug or the socket (1) to mechanically lock an interconnected plug/socket pair (1).

5. The plug connector according to one of the preceding claims, comprising a drive device (2) for the locking device (3), wherein the drive device (2) comprises the locking device (3), the centring device (11) is configured in two parts on the drive device (2) and on the plug or on the socket (1), and the first part of the centring device (11) provided on the drive device (2) has a projection (12) extending semi-circularly in an axial direction relative to the plug-in direction (7) of the plug or the socket (1), and the second part of the centring device (11) provided on the plug or on the socket (1) has a semi-circularly extending groove (13) for receiving the projection (12) in a form-fitting manner.

6. The plug connector according to the preceding claim, wherein the drive device has a fastening means (14) for fixing the drive device (2) fastened to the plug or to the socket (1) .

7. The plug connector according to one of preceding claims 5 or 6, wherein the drive device (2) has an actuator (9), actuatable by an electric pulse, for locking and/or unlocking an interconnected plug/socket pair (1).

8. The plug connector according to one of the preceding claims, wherein the plug connector is configured to be fastened in an opening in a wall (5) in such a way that the plug or the socket (1) can be inserted into the opening from one side of the wall (5) only if the locking device (3) is not fastened to the plug or to the socket (1), and the locking device (3) can be fastened from the other side of the wall (5) to the plug or to the socket (1) inserted into the opening.

9. A plug connector arrangement comprising a plug connector according to one of the preceding claims and comprising a second plug connector.

10. A charging device or electric vehicle comprising a plug connector according to one of the preceding claims.

## Revendications

1. Connecteur à enfichage destiné au raccordement électrique d'un véhicule électrique à un dispositif de charge, avec une fiche mâle ou une fiche femelle (1) et un dispositif de verrouillage (3) entraîné de manière électromécanique, où
la fiche mâle, respectivement, la fiche femelle (1), est conçue pour l'établissement d'une liaison électrique avec une deuxième fiche femelle, respectivement, une deuxième fiche mâle, d'un deuxième connecteur à enfichage associé au véhicule électrique ou au dispositif de charge,
le dispositif de verrouillage (3) est conçu mobile axialement par rapport au sens d'enfichage (7) de la fiche mâle, respectivement, de la fiche femelle (1), pour le verrouillage mécanique et/ou le déverrouillage d'une paire de fiche mâle - fiche femelle (1) reliées ensemble, et
le dispositif de verrouillage (3) et/ou la fiche mâle, respectivement, la fiche femelle (1), présentent un dispositif de centrage (11) conçu de telle manière que le dispositif de verrouillage (3) peut être fixé de manière amovible par complémentarité des formes sur la fiche mâle, respectivement, sur la fiche femelle (1), dans une position prédéfinie par le dispositif de centrage (11).

2. Connecteur à enfichage selon la revendication précédente, dans lequel le dispositif de centrage (11) est conçu de telle manière que la position prédéfinie peut être atteinte, par la fixation du dispositif de verrouillage (3) sur la fiche mâle, respectivement, sur la fiche femelle (1), au moyen d'un premier mouvement du dispositif de verrouillage (3) en direction radiale par rapport au sens d'enfichage (7) de la fiche male, respectivement, de la fiche femelle (1) et au moyen d'un deuxième mouvement en direction axiale par rapport au sens d'enfichage (7) de la fiche mâle, respectivement, de la fiche femelle (1).

3. Connecteur à enfichage selon l'une des revendications précédentes, dans lequel le dispositif de verrouillage (3) est conçu sous la forme d'un boulon (8).

4. Connecteur à enfichage selon l'une des revendications précédentes, dans lequel la fiche mâle, respectivement, la fiche femelle (1), présente un orifice (10) pour l'insertion du boulon, l'orifice (10) et le boulon présentent un diamètre à peu près identique et le boulon est disposé dans la position prédéfinie de manière relative de sorte que, par rapport à la fiche mâle, respectivement, à la fiche femelle (1), le boulon peut être inséré dans l'orifice (10) pour le verrouillage mécanique d'une paire de fiche mâle- fiche femelle (1) reliées ensemble axialement par rapport au sens d'enfichage (7) de la fiche mâle, respectivement, de la fiche femelle (1).

5. Connecteur à enfichage selon l'une des revendications précédentes, avec un dispositif d'entraînement (2) pour le dispositif de verrouillage (3), où le dispositif d'entraînement (2) comprend le dispositif de verrouillage (3), le dispositif de centrage (11) est conçu en deux parties sur le dispositif d'entraînement (2) et sur la fiche mâle, respectivement, sur la fiche femelle (1), et la première partie du dispositif de centrage (11) prévue sur le dispositif d'entraînement (2) présente une collerette (12) s'étendant en forme d'un demi cercle, dans la direction axiale par rapport au sens d'enfichage (7) de la fiche mâle, respectivement, de la fiche femelle (1), et la deuxième partie du dispositif de centrage (11) prévue sur la fiche mâle, respectivement, sur la fiche femelle (1), présente une rainure (13) s'étendant en forme d'un demi cercle pour l'admission par complémentarité des formes de la collerette (12).

6. Connecteur à enfichage selon la revendication précédente, dans lequel le dispositif d'entraînement présente un moyen de fixation (14) pour la fixation du dispositif d'entraînement (2) fixé sur la fiche mâle, respectivement, sur la fiche femelle (1).

7. Connecteur à enfichage selon l'une des revendications précédentes 5 ou 6, dans lequel le dispositif d'entraînement (2) présente un actionneur (9) pouvant être entraîné par une impulsion électrique pour le verrouillage, respectivement, le déverrouillage, d'une paire de fiche mâle - fiche femelle (1) reliées ensemble.

8. Connecteur à enfichage selon l'une des revendications précédentes, où le connecteur à enfichage est conçu de telle manière pour la fixation dans un orifice d'une cloison (5) que la fiche mâle, respectivement, la fiche femelle (1), peut être insérée dans l'orifice à partir du côté de la cloison (5) uniquement lorsque le dispositif de verrouillage (3) n'est pas fixé sur la fiche mâle, respectivement, sur la fiche femelle (1), et le dispositif de verrouillage (3) peut être fixé à partir de l'autre côté de la cloison (5) sur la fiche mâle, respectivement, la fiche femelle (1), insérée dans l'orifice.

9. Ensemble connecteur à enfichage avec un connecteur à enfichage selon l'une des revendications précédentes et un deuxième connecteur à enfichage.

10. Dispositif de charge ou véhicule électrique avec un connecteur à enfichage selon l'une des revendications précédentes.
